# FASCICULE DE BREVET EUROPEEN

(11) **EP 3 233 394 B1**
(45) Date de publication et mention de la délivrance du brevet: **14.09.2022**
(21) Numéro de dépôt: 15807951.7
(22) Date de dépôt: 09.11.2015
(51) Int. Cl.: B25J 9/16, B62D 65/02

(54) **DISPOSITIF DE MISE AU POINT ET DE CONTROLE D'UN OUTIL DE PREHENSION/DEPOSE D'UNE PIECE A ASSEMBLER NOTAMMENT LORS D'UN PROCEDE D'ASSEMBLAGE PAR SOUDO-BRASAGE AU LASER ENTRE DEUX PIECES.**
VORRICHTUNG ZUR ENTWICKLUNG UND STEUERUNG EINES WERKZEUGS ZUM GREIFEN/ABSETZEN EINES ZUSAMMENZUBAUENDEN TEILS, INSBESONDERE WÄHREND EINES ZUSAMMENBAUVERFAHREN MITTELS LASERSCHWEISSLÖTENS ZWISCHEN ZWEI TEILEN
DEVICE FOR DEVELOPING AND CONTROLLING A TOOL FOR GRIPPING/DEPOSITING A PART TO BE ASSEMBLED ESPECIALLY DURING A METHOD OF ASSEMBLY BY LASER BRAZE-WELDING BETWEEN TWO PARTS

(30) Priorité: 19.12.2014 FR 1462967
(43) Date de publication de la demande: 25.10.2017
(73) Titulaire: PSA Automobiles SA, 78300 Poissy (FR)
(72) Inventeur: PONCELET, Frederic, F-70400 Verlans (FR); MARTINA, Bruno, F-25550 Issans (FR); AUPRETRE, Sylvain, F-78560 Le Port Marly (FR)
(74) Mandataire: Fernandez, Francis Lionel
(86) Numéro de dépôt international: PCT/FR2015/053037
(87) Numéro de publication internationale: WO 2016/097507

(56) Documents cités:
- WO-A1-02/45901
- DE-U1-202008 003 348
- US-A1- 2008 184 561
- US-B1- 6 167 607
- SHIRINZADEH B ED - GRABOT BERNARD SCHLEGEL THOMAS: "Strategies for planning and implementation of flexible fixturing systems in a computer integrated manufacturing environment", COMPUTERS IN INDUSTRY, ELSEVIER SCIENCE PUBLISHERS. AMSTERDAM, NL, vol. 30, no. 3, 15 octobre 1996 (1996-10-15), pages 175-183, XP004013552, ISSN: 0166-3615, DOI: 10.1016/0166-3615(96)00011-5

## Description

La présente invention se rapporte à un dispositif de mise au point et de contrôle d'un outil de préhension/dépose d'une pièce à assembler notamment lors d'un procédé d'assemblage par soudo-brasage au laser entre deux pièces et plus particulièrement un procédé d'assemblage d'un pavillon sur la caisse d'un véhicule automobile.

Le brasage est une technique d'assemblage de deux matériaux à l'aide d'un métal d'apport de nature différente possédant une température de fusion inférieure à celle des matériaux à assembler et apte à mouiller convenablement les surfaces desdits matériaux, ces surfaces ne participant pas par leur fusion à la constitution du joint brasé.

En pratique, le brasage est réalisé par interposition du métal d'apport entre les deux composants à assembler, la zone à braser étant ensuite chauffée à une température permettant la fusion du métal d'apport mais pas celle des composants à assembler. Le métal d'apport liquéfié mouille les surfaces des deux composants à assembler puis est refroidi de manière à se solidifier entre les deux composants pour en assurer la liaison. Le chauffage de la zone à braser peut classiquement se faire par la flamme d'un chalumeau, un arc électrique, ou encore un laser.

Dans certains domaines techniques, comme le domaine automobile par exemple, l'assemblage par brasage permet d'éviter de nombreux inconvénients d'un assemblage traditionnel par soudure électrique, notamment le faits qu'un tel mode d'assemblage nécessite la réalisation de points de soudure électriques (en abrégé PSE) au fond d'une gorge de jonction entre les deux pièces à assembler, ladite gorge étant masquée ensuite par une bande enjoliveur.

Un assemblage par soudo-brasage permet une jonction continue des pièces à assembler, la disparition de la gorge de jonction, et donc également de la bande enjoliveur. Il s'ensuit de nombreux avantages esthétiques et mécaniques.

Afin de répondre aux critères esthétiques et mécaniques, le cordon de brasage doit être le plus possible exempt d'irrégularités et étanche, c'est-à-dire exempt de trou.

Pour ce faire, le positionnement entre elles des pièces à assembler revêt une importance particulière.

Dans le cas d'un pavillon d'un véhicule automobile, par exemple, destiné à être joint à un côté d'un habitacle dudit véhicule, il convient que le jeu d'accostage à la jointure du pavillon avec le côté de l'habitacle soit le plus réduit possible, de préférence nul et au maximum d'environ 0,3 mm au moment du brasage.

Pour obtenir une qualité de soudo-brasage élevée, il est donc nécessaire de garantir des conditions d'accostage des pièces à assembler en jouant sur plusieurs critères comme le critère de conception en respectant le référentiel technique de conception de produit et de processus, le critère de qualité en respectant le cahier des charges géométriques d'une part par la qualité géométrique des pièces, de l'armature du côté de caisse, et d'autre part par le respect des processus mis en œuvre par les outils. Un critère important concerne l'efficacité des actions de mise au point qui permettent l'analyse et la correction des défauts à leur source.

L'ensemble de ces critères sont autant de contraintes à respecter qu'ils n'interviennent pas tous au même moment. En effet, la conformité géométrique de l'armature de la caisse du véhicule survient tardivement car il s'agit du dernier maillon de tout le processus de fabrication d'une caisse automobile. Aussi, la mise au point de l'outil de préhension/dépose du pavillon ne peut survenir que sur une armature conforme en géométrie, ce qui décale cette mise au point dans le temps.

En effet, à I'ilot d'assemblage du pavillon sur une armature de véhicule, on a un poste d'approvisionnement du pavillon avec une mise en référence dudit pavillon sur une table de positionnement. Puis un outil de préhension/dépose se saisit du pavillon sur la table et vient positionner ledit pavillon sur la caisse. Un assemblage par points de soudure électrique du pavillon sur la traverse avant et la traverse arrière est réalisé puis on effectue le soudo-brasage au laser sur les côtés d'habitacle de la caisse.

Les documents US6167607, US2008/184561 et SHIRINZADEH B ED - Grabot Berard Schlegel Thomas : "Strategies for planning and implementation of flexible fixturing systems in a computer integrated manufacturing environment", Computers in industry , Elsevier Science Publishers. AMSTERDAM, NL, vol.30, n°3, 15/10/1996, décrivent des systèmes d'assemblage de l'art antérieur.

En conséquence, dans le processus actuel d'assemblage d'une caisse de véhicule, on réalise une convergence qualité des pièces brutes puis une convergence qualité du côté de caisse assemblé, suivie d'une convergence qualité de l'armature avant d'arriver à une convergence de capabilité de l'outil de préhension/dépose du pavillon sur l'armature et enfin une convergence de capabilité de l'outil de placage et le paramétrage soudure. Cet enchainement des actions de mise au point retarde d'autant l'obtention de la qualité d'accostage requise.

La présente invention a donc pour but de pallier cet inconvénient en proposant un dispositif de mise au point et contrôle de l'outil de préhension/dépose d'un pavillon sur une armature de caisse, qui ne dépend pas de ladite armature.

La présente invention concerne un dispositif de mise au point et de contrôle d'un outil de préhension/dépose d'une pièce à assembler sur une autre ainsi que le procédé d'assemblage d'un pavillon sur une caisse de véhicule.

L'invention a donc pour objet un dispositif de mise au point et de contrôle d'un outil de préhension/dépose d'une pièce à assembler sur une caisse de véhicule, caractérisé en ce qu'il comprend une structure porteuse sur laquelle sont positionnés des éléments reproduisant la géométrie de la partie de caisse de véhicule devant recevoir la pièce à assembler, lesdits éléments formant un modèle géométrique de référence correspondant à la définition numérique théorique de la partie de caisse du véhicule sur laquelle la pièce à assembler doit être déposée par l'outil de préhension/dépose.

De manière avantageuse, on améliore ainsi l'efficacité de la mise au point de l'outil de préhension/dépose en mettant à disposition un modèle de référence théorique de sorte que la mise au point dudit outil de préhension/dépose peut être réalisée indépendamment de l'armature et de sa qualité géométrique et ce, bien avant que ladite armature n'arrive à l'îlot d'assemblage de la pièce.

De préférence, un tel dispositif est particulièrement avantageux lors de l'assemblage d'un pavillon sur une caisse de véhicule, la structure porteuse et les éléments de référence dudit dispositif correspondant à la partie supérieure d'une caisse de véhicule, ladite structure porteuse correspondant ainsi à une traverse avant, une traverse arrière et deux côtés d'habitacle, lesdits éléments de référence sur la structure formant un modèle de référence correspondant à la définition numérique théorique des pièces du véhicule.

En effet, un tel outil de préhension et de dépose comporte des organes de préhension tels que des ventouses et des conformateurs tels que des vérins pour permettre une prise correcte de la pièce notamment concernant son galbe éventuel. Il est donc nécessaire de réaliser une mise au point des divers conformateurs de préhension pour obtenir un outil qui permet une dépose optimale de la pièce à assembler sur l'armature, garantissant de ce fait un placage optimal de la pièce lors du soudo-brasage ultérieur et également un cordon de soudo-brasure de bonne qualité.

De préférence, le modèle de référence est réalisé de blocs en fonte telle que de la fonte grise, de la fonte d'acier, usinés suivant la définition théorique des pièces du véhicule.

Ainsi, le dispositif selon l'invention permet un gain de temps au niveau de la mise au point de la ligne d'assemblage mais en outre, il permet également en cas de défaillance de réaliser un contrôle de l'outil de conformation et de la pièce elle-même contribuant au diagnostic rapide des causes de défaillances.

Selon une forme de réalisation préférée de l'invention, le dispositif de mise au point et de contrôle est implanté sur une table de stockage de l'outil de préhension/dépose, ce qui lui permet d'être positionné au niveau de l'îlot d'assemblage de la pièce sans encombrer celui-ci tout en restant à disposition pour des contrôles.

On décrira maintenant l'invention plus en détails en référence au dessin dans lequel :
La figure 1 représente une vue en perspective du dessus d'un dispositif de mise au point et de contrôle selon l'invention ;
La figure 2 représente une vue en perspective du dessus d'une forme de réalisation préférée de l'invention ;

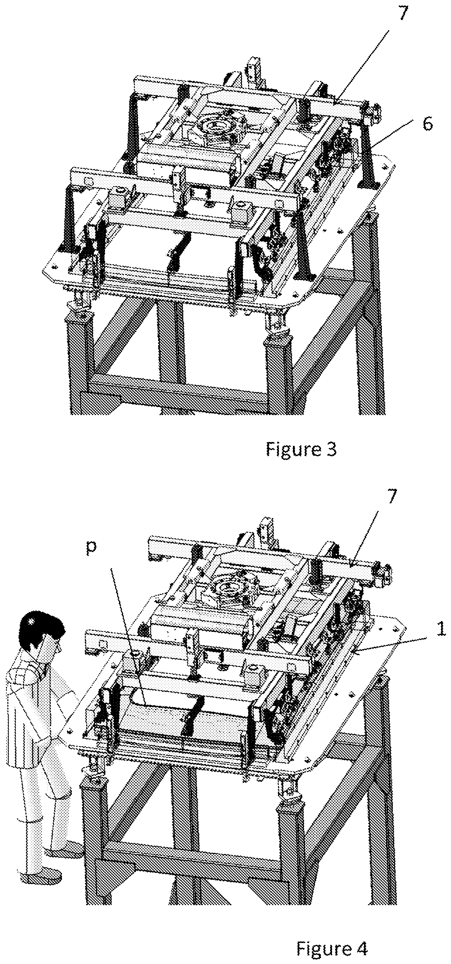

La figure 3 représente une vue en perspective du dispositif de la figure 2 en fonction stockage de l'outil de préhension/dépose ;
La figure 4 représente une vue en perspective du dispositif selon la figure 2 en fonction mise au point et contrôle d'un outil de préhension/dépose ;
La figure 5 représente une vue en perspective du dispositif de la figure 2 en fonction contrôle d'un pavillon ; et
La figure 6 est une vue schématique du dessus d'un îlot d'assemblage de pavillon sur une caisse de véhicule.

Dans la description suivante des figures, le référentiel choisi est celui du véhicule dans lequel l'axe X correspond à l'axe longitudinal du véhicule, l'axe Y correspond à l'axe transversal du véhicule et l'axe Z correspond à l'axe dans le sens de la hauteur du véhicule.

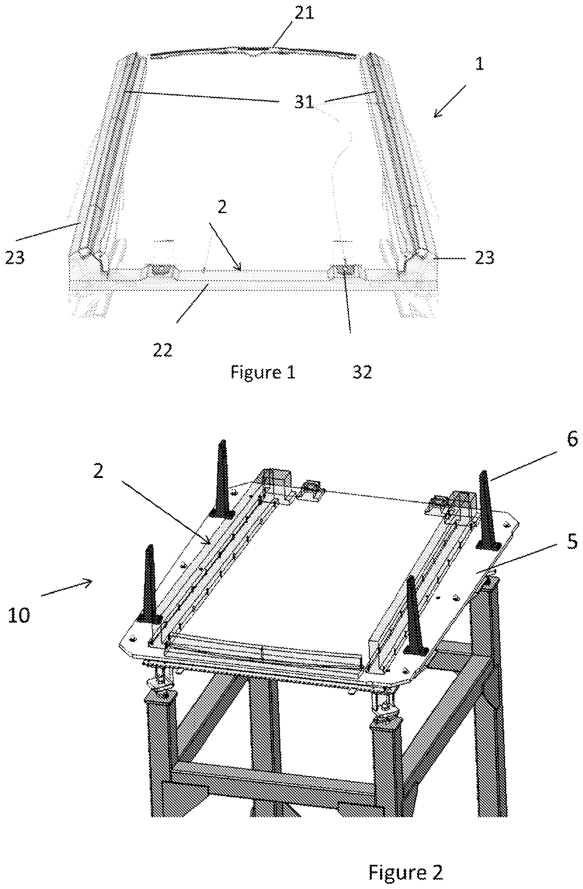

Comme on peut le voir à la figure 1, le dispositif de mise au point et de contrôle 1 selon l'invention comporte une structure porteuse 2 sous forme d'un cadre mécano-soudé dont les dimensions sont équivalentes à celles de la partie supérieure de l'armature sur laquelle une pièce doit être assemblée. Dans le cas présent, le cadre définie une armature comprenant une traverse avant 21, une traverse arrière 22 et des bords longitudinaux correspondant aux côtés d'habitacle 23 d'une caisse de véhicule sur laquelle un pavillon P doit être assemblé.

Sur ce cadre 2 sont montés des éléments de référence 3 qui, une fois mis en place sur la structure porteuse 2, définissent un référentiel géométrique de positionnement du pavillon P sur la caisse de véhicule correspondant aux côtés d'habitacle de la caisse prêts à recevoir le pavillon devant être soudo-brasé. En effet, ce dispositif de mise au point et contrôle 1 présente des dimensions correspondant à la définition numérique théorique de la partie de caisse du véhicule destinée à recevoir le pavillon P.

Ainsi, on met en place le long des bords longitudinaux du cadre, des blocs usinés 33 pour constituer les « côtés d'habitacle » de référence entre lesquels un pavillon doit se loger en présentant un jeu maximal de 0,3 mm.

Ces éléments de référence 3 sont de préférence usinés dans des blocs en fonte de sorte que leurs dimensions ne peuvent varier, le dispositif de contrôle 1 ainsi constitué étant identique au cours du temps.

Des éléments de référence 32 sont mis en place au niveau de la traverse arrière 22 de la structure porteuse et permettent ainsi avantageusement de contrôler la position selon l'axe X et l'axe Z du pavillon P, ce qui permet un contrôle du jeu et affleurement du pavillon P par rapport au volet arrière du véhicule.

Ce dispositif de contrôle 1 est mis à disposition au niveau de l'îlot d'assemblage du pavillon P sur une caisse de véhicule, de sorte qu'il est possible en cours de processus et avant même qu'une caisse véritable n'arrive audit poste de mettre au point l'outil de préhension/dépose du pavillon P.

Selon une forme de réalisation préférée, le dispositif de mise au point et contrôle 10 selon l'invention est adapté pour former un support de stockage de l'outil de préhension/dépose.

Un tel support de stockage 10 est représenté à la figure 2, dans laquelle on peut voir qu'il est constitué d'une table 5 muni de quatre chandelles 6 sur lesquelles l'outil de préhension/dépose 7 peut être posé.

Sur cette même table 5 est installé le dispositif de mise au point et contrôle 1 selon l'invention constitué de la structure porteuse 2 et des éléments de référence 3. Lorsque l'outil de dépose 7 doit être mis au point ou contrôlé, on escamote les quatre chandelles 6 et on dépose un pavillon P porté par ledit outil 7 sur le dispositif de mise au point contrôle 1. On réalise ainsi la mise au point et conformation de l'outil de préhension/dépose 7 par rapport aux éléments de référence 31, 32.

Le dépôt du pavillon P sur le dispositif de mise au point et contrôle permet également de réaliser une analyse et un contrôle géométrique dudit pavillon P.

Un tel dispositif de mise au point et contrôle 1 intégré à l'îlot d'assemblage du pavillon P permet de raccourcir le temps de mise au point de la ligne d'assemblage et en cas de crise de qualité de vérifier si l'outil de préhension/dépose ou les pièces sont fautifs ou non. Ceci permet une réactivité sur la ligne d'assemblage qui constitue un atout important permettant de garantir un soudo-brasage de qualité.

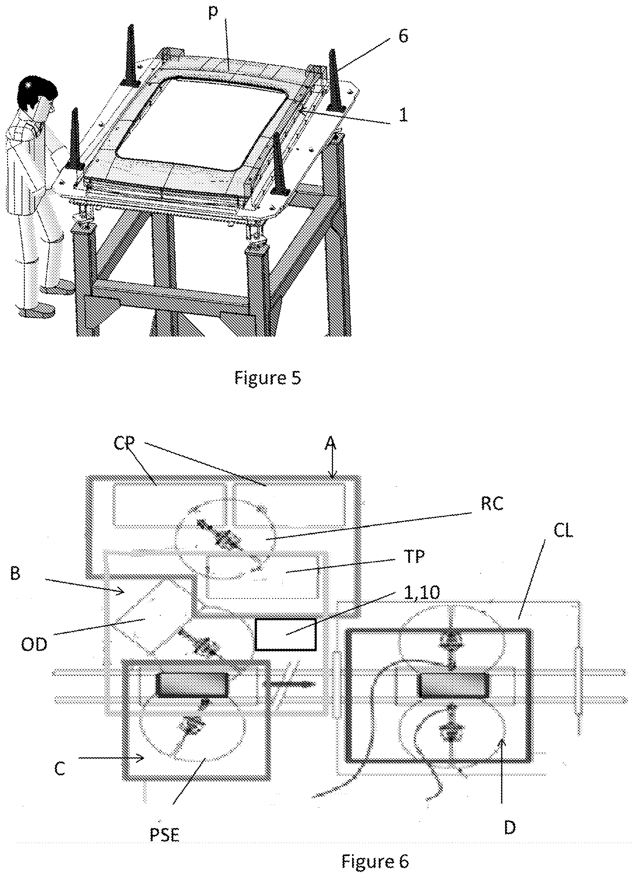

Comme on peut le voir sur la figure 6, le dispositif de mise au point et contrôle 10 est implanté en tant que dispositif de stockage et de contrôle dans un îlot d'assemblage entre le poste de chargement A du pavillon P dans lequel un robot de chargement RC prend depuis un conteneur de pavillon CP un pavillon P pour le déposer sur une table de positionnement du pavillon P. L'outil de préhension/dépose 7 prend la pavillon P et l'amène au poste C sur l'armature de caisse de véhicule Au poste C, un robot PSE soude le pavillon P au niveau des traverses avant et arrière. Puis l'armature équipée du pavillon P passe au poste de soudo-brasage D dans une cabine de soudage laser CL. L'outil de préhension/dépose 7 prend le pavillon P pour l'amener vers le dispositif de mise au point/contrôle 1 (poste B) où ledit outil 7 est vérifié avant d'être amené et déposé sur l'armature d'une caisse qui est amené au niveau du poste de dépose C.

## Revendications

1. Dispositif de mise au point et de contrôle d'un outil de préhension/dépose d'une pièce à assembler sur une caisse de véhicule, **caractérisé en ce qu'**il comprend une structure porteuse (2) sur laquelle sont positionnés des éléments (31, 32) reproduisant la géométrie de la partie de caisse de véhicule devant recevoir la pièce à assembler, lesdits éléments (31, 32) formant un modèle géométrique de référence correspondant à la définition numérique théorique de la partie de caisse du véhicule sur laquelle la pièce à assembler doit être déposée par l'outil de préhension/dépose (7).

2. Dispositif selon la revendication 1, **caractérisé en ce que** les éléments de référence (31, 32) sont constitués par des blocs en fonte usinés.

3. Dispositif selon l'une des revendications 1 et 2, **caractérisé en ce que** la structure porteuse (2) est sous forme d'un cadre mécano-soudé comprenant une traverse avant (21), une traverse arrière (22) et des bords longitudinaux sur lesquels sont positionnés des éléments de référence (31) pour correspondre aux côtés d'habitacle (23) d'une caisse de véhicule sur laquelle un pavillon (P) doit être assemblé.

4. Dispositif selon la revendication 3, **caractérisé en ce que** des éléments de référence (32) sont mis en place au niveau de la traverse arrière (22) de la structure porteuse et permettent un contrôle du jeu et affleurement d'un pavillon (P) par rapport au volet arrière du véhicule.

5. Dispositif selon l'une des revendications 1 à 4, **caractérisé en ce qu'**il est adapté pour former un support de stockage (10) de l'outil de préhension/dépose (7) de la pièce à assembler.

6. Dispositif selon la revendication 4, **caractérisé en ce qu'**il est constitué d'une table comportant la structure porteuse (2) et ses éléments de référence (31, 32), ladite table présentant autour de la structure porteuse (2) des chandelles (6) sur lesquelles l'outil de préhension/dépose (7) peut être posé, lesdites chandelles (6) étant escamotables.

7. Ilot d'assemblage d'un pavillon (P) sur une caisse de véhicule, comprenant un poste d'approvisionnement en pavillon, un poste de dépose du pavillon sur une caisse et d'assemblage dudit pavillon par PSE puis un poste de soudo-brasage laser du pavillon sur la caisse, **caractérisé en ce qu'**il comporte en outre un dispositif de contrôle du pavillon selon l'une des revendications 5 et 6, interposé entre le poste d'approvisionnement et le poste de dépose dudit pavillon (P).

## Patentansprüche

1. Vorrichtung zum Fokussieren und Steuern eines Werkzeugs zum Greifen/Ablegen eines zu verbindenden Teils auf einen Fahrzeugkasten, **dadurch gekennzeichnet, dass** sie eine Tragstruktur (2) umfasst, auf der Elemente (31, 32) angeordnet sind, die die Geometrie des Fahrzeugkarosserieteils wiedergeben, der das zu verbindende Teil aufnehmen soll, wobei die Elemente (31, 32) ein entsprechendes geometrisches Bezugsmuster bilden die theoretische numerische Definition des Karosserieteils des Fahrzeugs, auf dem das Montageteil durch das Greif-/Ablagewerkzeug (7) abgelegt werden soll.

2. Vorrichtung nach Anspruch 1, **dadurch gekennzeichnet, dass** die Referenzelemente (31, 32) aus bearbeiteten Gussblöcken bestehen.

3. Vorrichtung nach einem der Ansprüche 1 und 2, **dadurch gekennzeichnet, dass** die Tragstruktur (2) als mechanischer Schweißrahmen mit einem vorderen Querträger (21), einem hinteren Querträger (22) und Längsrändern ausgebildet ist, an denen Referenzelemente (31) angeordnet sind, um den Seiten des Innenraums (23) eines Fahrzeugkastens zu entsprechen, an dem ein Pavillon (P) anzuordnen ist zusammengebaut.

4. Vorrichtung nach Anspruch 3, **dadurch gekennzeichnet, dass** am hinteren Querträger (22) der Tragstruktur Referenzelemente (32) angeordnet sind, die eine Spielkontrolle und Bündeln eines Daches (P) in Bezug auf die hintere Klappe des Fahrzeugs ermöglichen.

5. Vorrichtung nach einem der Ansprüche 1 bis 4, **dadurch gekennzeichnet, dass** sie zur Bildung eines Speichermediums (10) für das Greif-/Ablagewerkzeug (7) des zu verbindenden Werkstücks ausgelegt ist.

6. Vorrichtung nach Anspruch 4, **dadurch gekennzeichnet, dass** sie aus einem Tisch mit der Tragstruktur (2) und ihren Referenzelementen (31, 32) besteht, wobei der Tisch um die Tragstruktur (2) herum Kerzen (6) aufweist, auf die das Greif-/Ablagewerkzeug (7) aufsetzbar ist, wobei die Kerzen (6) einziehbar sind.

7. Die Kommission wird die Kommission um Beantwortung folgender Fragen ersuchen: Vorrichtung zum Verbinden eines Daches (P) mit einem Fahrzeugkasten, die eine Dachstation, eine Dachstation auf einem Kasten und das Verbinden des Daches durch PSE und dann eine Laserlötstation des Daches auf dem Kasten umfasst, **dadurch gekennzeichnet, dass** sie ferner eine Dachkontrollvorrichtung nach einem der Ansprüche 5 und 6 umfasst, die zwischen der Versorgungsstation und der Kasse angeordnet ist Abstellplatz des Pavillons (P).

## Claims

1. A device for the development and control of a tool for gripping/removing a part to be assembled on a vehicle body, **characterized by** a carrier structure (2) on which elements (31, 32) are placed, representing the geometry of the part of the vehicle body to be assembled, those elements (31, 32) forming a geometric reference model corresponding to the part of the vehicle body to be assembled. theoretical numerical definition of the body part of the vehicle on which the piece to be assembled is to be deposited by the grip/drop tool (7).

2. Device according to Claim 1, characterized as the reference elements (31, 32) are made up of cast iron blocks machined.

3. A device according to one of claims 1 and 2, characterized as the carrier structure (2) is in the form of a mechanically-welded frame comprising a front cross (21), a rear cross (22) and longitudinal edges on which reference elements (31) are positioned to correspond to the side of the passenger compartment (23) of a vehicle body on which a pavilion (P) is to be assembled.

4. A device in accordance with Claim 3, **characterized by** the fact that reference elements (32) are installed at the rear crossbar (22) of the carrier structure and allow for control of the play and clearance of a flag (P) in relation to the rear flap of the vehicle.

5. A device according to one of the claims 1 to 4, **characterized in that** it is suitable to form a storage medium (10) of the grip/drop tool (7) of the piece to be assembled.

6. A device according to Claim 4, **characterized in that** it consists of a table containing the bearing structure (2) and its reference elements (31, 32), the said table presenting around the carrying structure (2) candles (6) on which the grinding/removal tool (7) can be placed, the said candles (6) being removable.

7. Assembly lot of a flag (P) on a vehicle body, including a flag supply post, a flag drop post on a register and assembly of the flag by PSE, and a flag laser sudo-brazing post on the body, **characterized by** the fact that it also includes a flag control device in accordance with one of the claims 5 and 6, between the supply post and the seat of the flag flag (P).
